# EUROPÄISCHE PATENTSCHRIFT

(11) **EP 2 310 259 B1**
(45) Veröffentlichungstag und Bekanntmachung des Hinweises auf die Patenterteilung: **01.10.2014**
(21) Anmeldenummer: 09781391.9
(22) Anmeldetag: 03.08.2009
(51) Int. Cl.: B64C 1/06, B64D 11/00, B64F 5/00

(54) **VORMONTAGE UND INTEGRATION VON FLUGZEUGKABINEN**
PREASSEMBLY AND INTEGRATION OF AIRCRAFT CABINS
PRÉMONTAGE ET INTÉGRATION DE CABINES D'AVIONS

(30) Priorität: 13.08.2008 DE 102008038806; 13.08.2008 US 188815
(43) Veröffentlichungstag der Anmeldung: 20.04.2011
(73) Patentinhaber: Airbus Operations GmbH, 21129 Hamburg (DE)
(72) Erfinder: BLEES, Christoph, 20251 Hamburg (DE); HALFMANN, Niklas, 20357 Hamburg (DE); KRAUSE, Dieter, 21244 Buchholz (DE); GEHM, Marcus, 21614 Buxtehude (DE)
(74) Vertreter: Kopf, Korbinian Paul
(86) Internationale Anmeldenummer: PCT/EP2009/059993
(87) Internationale Veröffentlichungsnummer: WO 2010/018090

(56) Entgegenhaltungen:
- DE-A1-102006 034 862
- US-A1- 2005 184 194
- US-B1- 6 536 710

## Beschreibung

Die vorliegende Anmeldung beansprucht die Priorität der US Provisional Patentanmeldung Nr. 61/188,815, eingereicht am 13. August 2008 und der deutschen Patentanmeldung Nr. 10 2008 038 806.8, eingereicht am 13. August 2008.

### GEBIET DER ERFINDUNG

Die Erfindung betrifft die Montage und Integration von Flugzeugkabinen. Insbesondere betrifft die Erfindung ein Flugzeugkomponentenmontagesystem zur Vormontage und Integration zumindest eines Teils einer Flugzeugkabine in einer Flugzeugstruktur.

### TECHNOLOGISCHER HINTERGRUND DER ERFINDUNG

Ein bedeutender Anteil der Kosten und der Durchlaufzeit bei der Produktion von Flugzeugen entfällt auf die Endmontage der Kabine. Aus der Vielzahl der im Flugzeug zu montierenden Verkleidungsteilen, Überkopfgepäckablagefächern und Komponenten des Versorgungskanals ergeben sich hohe Durchlaufzeiten.

Bei der derzeitigen Montage wird zuerst der mittlere Teil der dreiteiligen Seitenverkleidung montiert. Im Anschluss daran erfolgt die Montage der Überkopfablagefächer. Nach der Montage der Ablagefächer wird unter den Ablagefächern entsprechend der Bestuhlung des Luftfahrzeugs der Versorgungskanal aus Untereinheiten aufgebaut. Anschließend erfolgt die Montage des oberen und unteren Teils der Seitenverkleidung sowie der Deckenverkleidung.

Die Integration der Komponenten der Verkleidung erfolgt durch die Passagiertür. Größere Komponenten, Küchen und Toiletten, werden allerdings vor der endgültigen Montage des Rumpfes in die offenen Sektionen gestellt. Sollte dies nicht möglich sein, da die Struktur an einem anderen Standort geschlossen wird und die Kabine erst nachträglich integriert wird, ist eine Demontage der Baugruppen in türgängige Einheiten erforderlich. Dies führt allerdings zu einem deutlich erhöhten Montageaufwand. Im Sinne der Erfindung wird davon ausgegangen, dass eine Integration in die offene Sektion möglich ist.

US 2007295862 A offenbart ein modulares Wandsystem für Flugzeugkabinen, bei dem die Wandsegmente allerdings erst innerhalb der Flugzeugkabine installiert werden.

Die DE 102006048376 offenbart eine Kabinenstruktureinheit zur Anbringung von Kabinenbauelementen für ein Flugzeug. Die Kabinenstruktureinheit ist freitragend ausgebildet.

Die DE 102006039290 offenbart ein Rahmenelement zur Verwendung in einem Flugzeugkomponentenmontagesystem, das an einer Flugzeugstruktur anbringbar ist und mindestens eine Befestigungseinrichtung zur Befestigung mindestens einer Flugzeuginterieurkomponente oder mindestens eines Isolationspakets an dem Rahmenelement aufweist.

US 2005/0184194 A1 beschreibt ein fahrbares Montagegestell für Flugzeugkabinenkomponenten.

US 6,536,710 B1 beschreibt eine Struktur zum Haltern von Überkopf-Gepäckfächern in einer Flugzeugkabine. Für die Montage ist eine Lifteinrichtung vorgesehen.

### ZUSAMMENFASSUNG DER ERFINDUNG

Es ist eine Aufgabe der Erfindung, die Montagezeit von Flugzeugstruktur und Flugzeugkabine zu verkürzen.

Es sind Flugzeugkomponentenmontagesysteme gemäß den Merkmalen der unabhängigen Ansprüche angegeben. Weiterbildungen der Erfindung ergeben sich aus den Unteransprüchen.

Gemäß einem Ausführungsbeispiel der Erfindung ist eine Montagevorrichtung zur Vormontage und Integration zumindest eines Teils einer Flugzeugkabine in einer Flugzeugstruktur angegeben, wobei die Montagevorrichtung einen Montagerahmen aufweist, der zu einer Vormontage des Teils der Flugzeugkabine ausgeführt ist. Weiterhin ist ein Transportsystem vorgesehen, das zum Fixieren des vormontierten Teils der Flugzeugkabine an den Montagerahmen und zum Verschieben des vormontierten Teils vom Montagerahmen in eine offene Sektion der Flugzeugstruktur ausgeführt ist.

Somit können die Flugzeugstruktur und Teile oder sogar die gesamte Flugzeugkabine parallel an verschiedenen Orten vormontiert werden. Durch die Vormontage der Kabine wird eine Parallelisierung der Montagetätigkeit und somit eine Verkürzung der Durchlaufzeit ermöglicht.

Die Verkleidungsteile der Kabine werden somit nicht erst nach der Fertigstellung der Flugzeugstruktur in die entsprechende Sektion der Flugzeugstruktur seriell montiert.

Der Teil der Flugzeugkabine, der vorinstalliert wird, weist Überkopfgepäckablagefächer und, gemäß einem weiteren Ausführungsbeispiel der Erfindung, Kabinenseitenverkleidungsteile und/oder gegebenenfalls einen Versorgungskanal auf. Gemäß einem weiteren Ausführungsbeispiel der Erfindung weist der vorinstallierte Teil der Flugzeugkabine eine Deckenverkleidung auf.

Somit bezieht sich die Vormontage beispielsweise nur auf jeweils die Verkleidungen an einer Seite des Rumpfes sowie eine Reihe von Gepäckablagen mit montiertem Versorgungskanal oder aber alternativ auf den gesamten Bogen der Flugzeugkabine mitsamt Deckenverkleidung.

Gemäß einem weiteren Ausführungsbeispiel der Erfindung entspricht der Montagerahmen der Flugzeugstruktur, bildet die Flugzeugstruktur also ab. Auf diese Weise wird erreicht, dass der oder die vorzumontierenden Teile der Flugzeugkabine bzw. die gesamte vorzumontierende Flugzeugkabine an dem Montagerahmen prinzipiell genauso angebracht sind, wie auch dann später in der entsprechenden Sektion der Flugzeugstruktur. Hierfür kann der Montagerahmen direkt an die Flugzeugstruktur angeschlossen werden oder zumindest direkt daneben angeordnet werden, so dass ein späteres Übertragen (Verschieben) der vormontierten Teile bzw. des vormontierten Teils der Flugzeugkabine in die offene Sektion der Flugzeugstruktur auf einfache Weise durchgeführt werden kann, ohne dabei den vormontierten Teil mechanisch stark zu beanspruchen.

Das Transportsystem ist als Schienensystem ausgeführt. Es weist hierfür eine oder mehrere Schienen und mehrere Halteelemente zum Fixieren des vormontierten Teils der Flugzeugkabine an den Montagerahmen auf. Weiterhin dienen die Schienen und die Halteelemente zum Verschieben des vormontierten Teils vom Montagerahmen in die offene Sektion der Flugzeugstruktur.

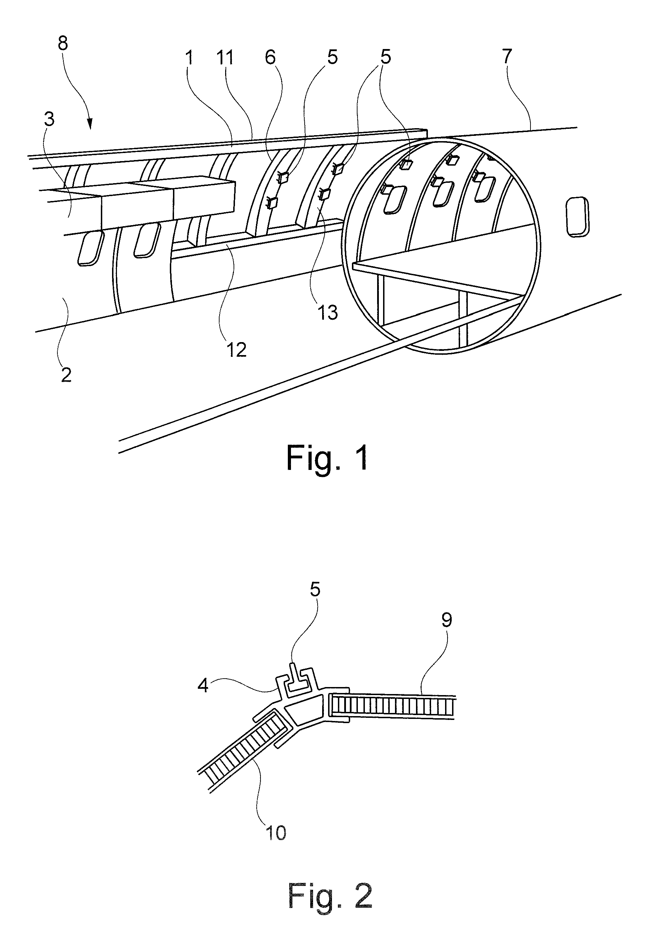

Hierbei greift das Halteelement beispielsweise in die Schiene ein, wie aus den Fig. 1 und 2 ersichtlich.

Auch ist es möglich, dass das Halteelement beispielsweise in Form einer Rolle ausgeführt ist, welche auf der Schiene läuft. Es ist weiterhin möglich, die Halteelemente und/oder die Schienen nach der Endinstallation der Flugzeugkabine in der Flugzeugstruktur zu entfernen. Auch ist es möglich, die Halteelemente und/oder die Schienen so auszuführen, dass sie als Anbindungspunkte für die Flugzeugkabine an der Flugzeugstruktur eingesetzt werden können. Auf diese Weise kann weiterer Installationsaufwand gespart werden.

Gemäß einem weiteren Ausführungsbeispiel der Erfindung sind die Schienen in der Flugzeugstruktur und in dem Montagerahmen integriert. Hierbei ist eine der Schienen in der Flugzeugstruktur und eine weitere, davon getrennte Schiene im Montagerahmen integriert bzw. an dem Montagerahmen angebracht. Die Halteelemente sind in diesem Fall in den Überkopfgepäckablagefächern oder an anderen Positionen der Flugzeugkabine bzw. Teilen der Flugzeugkabine angebracht bzw. integriert.

Gemäß einem weiteren Ausführungsbeispiel der Erfindung ist die Schiene in den Überkopfgepäckablagefächern integriert, wobei die Halteelemente an den Spanten der Flugzeugstruktur befestigt sind.

Gemäß einem weiteren Ausführungsbeispiel der Erfindung weist das Transportsystem Zugangsöffnungen auf, um eine Zugänglichkeit der Halteelemente zur Fixierung des vorinstallierten Kabinenteils in x-Richtung, einen Toleranzausgleich oder eine Demontage der Flugzeugkabine im Wartungsfall zu ermöglichen.

Bei der x-Richtung handelt es sich um die Flugrichtung, also die Längsachse der Flugzeugstruktur.

Gemäß einem weiteren Ausführungsbeispiel der Erfindung weist die Montagevorrichtung eine Lagerung zur drehbar gelagerten Montage der Kabinenseitenverkleidungsteile unter den Überkopfgepäckablagefächern auf. Auf diese Weise kann erreicht werden, dass die Seitenverkleidungen vor dem Einschieben des Kabinenteils in die Sektion in der Flugzeugstruktur nach innen geklappt werden können, ohne dass sie hierfür aus ihrer Verankerung gelöst werden müssen.

Zum abschließenden Fixieren der Kabinenseitenverkleidungsteile sind beispielsweise Schnappverbindungen vorgesehen.

Gemäß der Erfindung ist ein Flugzeugkomponentenmontagesystem zur Montage von Flugzeugkomponenten eines Flugzeugs angegeben, welches einzelne Bauteile einer Flugzeugkabine und eine oben und im Folgenden beschriebene Montagevorrichtung zur Vormontage und Integration zumindest eines Teils der Flugzeugkabine in eine Flugzeugstruktur aufweist.

Gemäß einem weiteren Ausführungsbeispiel der Erfindung werden entsprechende Kabinenseitenverkleidungsteile unter den Überkopfgepäckablagefächern drehbar gelagert montiert und zur Integration der vormontierten Bauteile der Flugzeugkabine in die Flugzeugstruktur eingeklappt bzw. nach innen geklappt.

Im Folgenden werden mit Verweis auf die Figuren bevorzugte Ausführungsbeispiele der Erfindung beschrieben.

### KURZE BESCHREIBUNG DER FIGUREN

Fig. 1 zeigt eine schematische Darstellung einer Flugzeugstruktur und einer Montagevorrichtung gemäß einem Ausführungsbeispiel der Erfindung.
Fig. 2 zeigt die Integration einer Schiene in eine Überkopfgepäckablage gemäß einem Ausführungsbeispiel der Erfindung.
Fig. 3A bis 3D zeigen schematische Darstellungen einer Seitenwandaufhängung gemäß einem Ausführungsbeispiel der Erfindung.
Fig. 4A und 4B zeigen schematische Darstellungen einer Schnappverbindung gemäß einem Ausführungsbeispiel der Erfindung.
Fig. 5 zeigt ein Flussdiagramm eines Verfahrens zur Vormontage und Integration eines Teils einer Flugzeugkabine in eine Flugzeugstruktur.

### DETAILLIERTE BESCHREIBUNG VON AUSFÜHRUNGSBEISPIELEN

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1 zeigt eine schematische Darstellung einer Flugzeugstruktur 7 sowie einer damit korrespondierenden, also darauf abgestimmten Montagevorrichtung 8. Die Montagevorrichtung 8 weist einen Montagerahmen 1 auf. Der Montagerahmen 1 besteht beispielsweise aus mehreren parallelen, im Wesentlichen horizontal angeordneten Segmenten 11, 12 sowie senkrecht dazu stehenden, die Flugzeugstruktur nachbildenden Quersegmenten (siehe beispielsweise Bezugszeichen 6 und 13).

An den Quersegmenten 6, 13 und auch an den Flugzeugrippen, d.h. an den Spanten und/oder Stringern, der Flugzeugstruktur 7 sind Halteelemente 5 angebracht.

Diese Halteelemente 5 greifen in entsprechende Schienen ein, die an der vorinstallierten Flugzeugkabine befestigt sind und welche die vorinstallierte Flugzeugkabine tragen.

Weiterhin sind ein Versorgungskanal 3 sowie die Verkleidungen einer Seite des Flugzeugs (siehe Bezugszeichen 2) vorgesehen.

Der Montagerahmen 1, die Seitenverkleidungsteile 2 und der Versorgungskanal 3 bilden ein Flugzeugkomponentenmontagesystem.

Die Erfindung bezieht sich auf ein neuartiges Montagekonzept, das eine Vormontage der Verkleidungsteile sowie der Hatracks und des Servicekanals ermöglicht. Wie in Fig. 1 zu sehen, erfolgt im Sinne dieses Konzepts die Montage der Kabinenverkleidung in einem Montagerahmen 1, der die Rumpfstruktur abbildet. Hierbei kann sich die Vormontage, wie dargestellt, nur auf jeweils die Verkleidungen einer Seite 2 sowie einer Reihe von Gepäckablagen bei montiertem Versorgungskanal beziehen. Alternativ hierzu kann der gesamte Bogen der Flugzeugkabine mitsamt der Deckenverkleidung vormontiert werden (nicht gezeigt in Fig. 1).

Durch die somit ermöglichte Parallelisierung von Struktur- und Kabinenmontage kann eine erhebliche Verkürzung der Durchlaufzeit der Kabinenmontage erreicht werden. Zusätzlich wird durch die Vormontage in einem Rahmen der Anteil der Arbeit, die in einer Zwangslage (also unter eingeschränkten Bewegungsspielraum des Installateurs) ausgeführt werden muss, deutlich verringert, da die Zugänglichkeit der Bauteile sehr einfach und von beiden Seiten möglich ist. Durch die Verbesserte Zugänglichkeit sowie den erweiterten Handhabungsraum wird ebenfalls eine Automatisierung der Vormontage ermöglicht.

Hierdurch können die erforderlichen Arbeitsschritte schneller und bei Bedarf auch von mehr Monteuren ausgeführt werden, als dies im Flugzeuginneren möglich wäre.

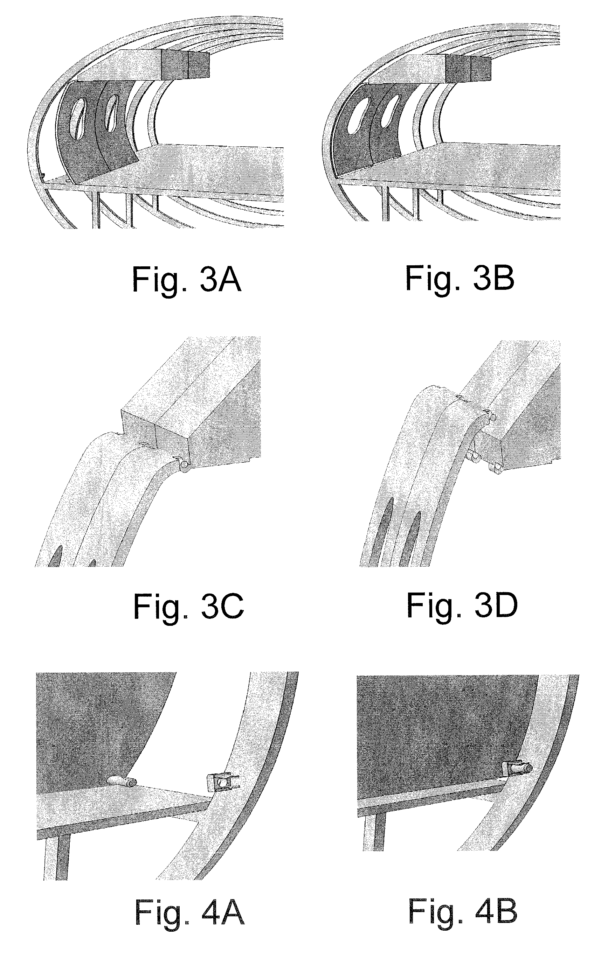

Die Anbindung der Verkleidungsteile erfolgt über ein Schienenkonzept. Auf diesem Weg wird ermöglicht, dass die vormontierte Kabinenverkleidung vom Montagegerüst in die offene Sektion geschoben werden kann. Um eine Nutzung der Spantenzwischenräume hinter den Seitenverkleidungen zu ermöglichen (beispielsweise für den Fenstertrichter), sind die Seitenverkleidungen drehbar unter den Überkopfgepäckablagen montiert. Dies ist beispielsweise aus Fig. 3 ersichtlich.

Fig. 3A bis 3D zeigen schematische Darstellungen einer drehbar gelagerten Aufhängung der Seitenverkleidungen.

Wie in Fig. 3A zu sehen, sind die Seitenwandverkleidungen 2 im Bereich des Versorgungskanals 3 drehbar gelagert. Nachdem die Flugzeugkabine bzw. der vorinstallierte Teil der Flugzeugkabine in die Flugzeugstruktur eingeschoben worden ist, können die Seitenteile 2 nach außen geklappt werden (siehe Fig. 3B). Beim nach außen klappen der Seitenverkleidungen schnappt die Steckverbindung 302, die sich im unteren Bereich der Seitenverkleidung 2 befindet, in das entsprechende Gegenstück 301 an der Flugzeugstruktur ein, so dass die Seitenverkleidung arretiert ist.

Fig. 3C und 3D zeigen eine Detailvergrößerung des oberen Bereichs der Seitenverkleidungsteile 2. Wie in Fig. 3C zu erkennen ist, sind die Seitenverkleidungsteile 2 drehbar an den Überkopfablagefächern oder am Versorgungskanal gelagert. Hierfür sind an dem Versorgungskanal 3 halbkreisförmige Lagerungen 304 vorgesehen, auf welchen die achsartigen Nasen 305 der Seitenwände 2 zu liegen kommen, so dass sich die Seitenwände 2 um die dadurch definierte Achse drehen können.

Zur Integration in den Rumpf ist die Seitenverkleidung leicht nach innen eingeklappt. In der Sektion erfolgt zuerst die endgültige Fixierung der Baugruppe in x-Richtung und der Ausgleich von Toleranzen zwischen der Flugzeugstruktur und den Verteilungsbauteilen. Abschließend werden die erforderlichen Systemschnittstellen (Strom, Information, Luft, Sauerstoff) miteinander verbunden und die Seitenverkleidungen in ihre endgültigen Positionen ausgeklappt.

Die Integration der Schiene kann entsprechend zweier Konzepte vorgenommen werden. Der erste Ansatz ist die Integration der Schiene in die Flugzeugstruktur.

Hierbei sind die Halteelemente an den Überkopfgepäckablagen angebracht. Alternativ kann die Schiene 4 in die Überkopfgepäckablagen integriert werden. Die Halteelemente befinden sich in diesem Fall an der Flugzeugstruktur (siehe Fig. 2).

Fig. 2 zeigt zwei Teile 9, 10 eines Überkopfgepäckablagefaches sowie einen Querschnitt der Schiene 4 und ein darin eingreifendes und entlang der Schiene verschiebbares Halteelement 5.

In diesem Fall kann die Schiene zusätzlich die Funktion einer Kantenverbindung an den Ecken des Ablagefachs übernehmen und somit weitestgehend gewichtsneutral ausgeführt werden. Die entsprechenden Halteelemente 5 werden hierbei, wie in Fig. 1 dargestellt, an den Spanten befestigt. Eine Zugänglichkeit der Befestigungselemente zur Fixierung in x-Richtung, zum Toleranzausgleich oder aber zur Demontage im Wartungsfall wird durch Zugangsöffnungen in der Führungsschiene ermöglicht.

Die Anbindung der Seitenverkleidung kann nach dem Ausklappen am unteren Ende beispielsweise durch Schnappverbindungen erfolgen.

Fig. 4A und 4B zeigen eine solche Anbindung der Seitenverkleidungen durch Schnappverbindungen.

Die Schnappverbindungen 301, 302 bestehen beispielsweise aus einer stab- oder achsförmigen Nase 302, die an die Seitenwandverkleidung 2 angebracht ist. Das Gegenstück wird durch ein Sicherungselement 301 gebildet, welches eine Aussparung bzw. eine Bohrung aufweist, in welche die Nase 302 eingreift, wenn die Seitenwand 2 nach außen geschwenkt wird. Von der Rückseite der Sicherung 301 ist eine Klammer 401 vorgesehen, welche den Stift 302 vor einem Herausrutschen sichert, indem sie in die Aussparung 402 des Stiftes eingreift, wenn der Stift genügend weit in die Bohrung eingeschoben ist.

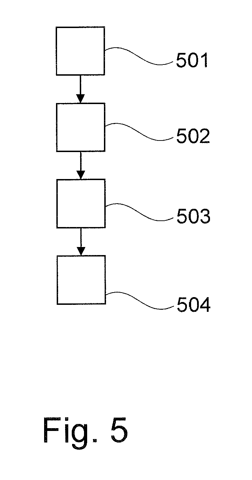

Fig. 5 zeigt ein Flussdiagramm eines Verfahrens zur Vormontage und Integration eines Teils einer Flugzeugkabine in eine Flugzeugstruktur. In Schritt 501 werden einzelne Bauteile der Flugzeugkabine unter Zuhilfenahme einer Montagevorrichtung vormontiert. Die Vormontage erfolgt außerhalb der entsprechenden Sektion der Flugzeugstruktur. Die Kabinenseitenverkleidungsteile werden in Schritt 502 drehbar gelagert. Diese drehbare Lagerung erfolgt unter den Überkopfgepäckablagefächern.

In Schritt 503 erfolgt ein Einklappen der Kabinenseitenverkleidungsteile nach innen zur Integration der vormontierten Bauteile der Flugzeugkabine in die Sektion der Flugzeugstruktur. In Schritt 504 werden dann die vormontierten Bauteile von der Montagevorrichtung in eine offene Sektion der Flugzeugstruktur hineingeschoben. Hierfür wird das Transportsystem der Montagevorrichtung verwendet.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Flugzeugkomponentenmontagesystem zur Montage von Flugzeugkomponenten, das Flugzeugkomponentenmontagesystem aufweisend:
eine Flugzeugstruktur;
einzelne Bauteile einer Flugzeugkabine;
Überkopfablagefächer;
eine Montagevorrichtung zur Vormontage und Integration zumindest eines Teils der Flugzeugkabine in die Flugzeugstruktur, wobei die Montagevorrichtung einen Montagerahmen (1) aufweist, welcher zu einer Vormontage des Teils der Flugzeugkabine bestehend aus den einzelnen Bauteilen und den Überkopfablagefächer ausgeführt ist;
ein Transportsystem (4, 5) zum Fixieren des vormontierten Teils der Flugzeugkabine an dem Montagerahmen (1) und zum Verschieben des vormontierten Teils vom Montagerahmen (1) in eine offene Sektion der Flugzeugstruktur;
wobei das Transportsystem (4, 5) als Schienensystem ausgeführt ist, das zumindest eine erste Schiene (4), eine zweite Schiene und mehrere Halteelemente (5) zum Fixieren des vormontierten Teils der Flugzeugkabine an dem Montagerahmen (1) und zum Verschieben des vormontierten Teils vom Montagerahmen (1) in die offene Sektion der Flugzeugstruktur aufweist;
wobei die erste Schiene in der Flugzeugstruktur und die zweite Schiene in dem Montagerahmen (1) integriert ist; und
wobei die Halteelemente (5) in den Überkopfgepäckablagefächern integriert sind.

2. Flugzeugkomponentenmontagesystem zur Montage von Flugzeugkomponenten, das Flugzeugkomponentenmontagesystem aufweisend:
eine Flugzeugstruktur;
einzelne Bauteile einer Flugzeugkabine;
Überkopfablagefächer;
eine Montagevorrichtung zur Vormontage und Integration zumindest eines Teils der Flugzeugkabine in die Flugzeugstruktur, wobei die Montagevorrichtung einen Montagerahmen (1) aufweist, welcher zu einer Vormontage des Teils der Flugzeugkabine bestehend aus den einzelnen Bauteilen und den Überkopfablagefächer ausgeführt ist;
ein Transportsystem (4, 5) zum Fixieren des vormontierten Teils der Flugzeugkabine an dem Montagerahmen (1) und zum Verschieben des vormontierten Teils vom Montagerahmen (1) in eine offene Sektion der Flugzeugstruktur;
wobei der Montagerahmen (1) aus mehreren parallelen, im Wesentlichen horizontal angeordneten Segmenten (11,12) sowie senkrecht dazu stehenden, die Flugzeugstruktur nachbildenden Quersegmenten (6,13) besteht;
wobei das Transportsystem (4, 5) als Schienensystem ausgeführt ist, das zumindest eine Schiene und mehrere Halteelemente (5) zum Fixieren des vormontierten Teils der Flugzeugkabine an dem Montagerahmen (1) und zum Verschieben des vormontierten Teils vom Montagerahmen (1) in die offene Sektion der Flugzeugstruktur aufweist;
wobei die Schiene (4) in den Überkopfgepäckablagefächern integriert ist; und
wobei die Halteelemente (5) an den Spanten (6) der Flugzeugstruktur und an den Quersegmenten des Montagerahmens befestigt sind.

3. Flugzeugkomponentenmontagesystem nach Anspruch 1 oder 2,
wobei der Teil der Flugzeugkabine Kabinenseitenverkleidungsteile aufweist.

4. Flugzeugkomponentenmontagesystem nach einem der vorangehenden Ansprüche,
wobei der Teil der Flugzeugkabine weiterhin eine Deckenverkleidung aufweist.

5. Flugzeugkomponentenmontagesystem nach einem der Ansprüche 1, 3 und 4,
wobei der Montagerahmen (1) aus mehreren parallelen, im Wesentlichen horizontal angeordneten Segmenten (11,12) sowie senkrecht dazu stehenden, die Flugzeugstruktur nachbildenden Quersegmenten (6,13) besteht.

6. Flugzeugkomponentenmontagesystem nach einem der vorhergehenden Ansprüche,
wobei das Transportsystem Zugangsöffnungen aufweist, um eine Zugänglichkeit der Halteelemente (5) zur Fixierung in x-Richtung, einen Toleranzausgleich oder eine Demontage der Flugzeugkabine im Wartungsfall zu ermöglichen.

7. Flugzeugkomponentenmontagesystem nach einem der vorhergehenden Ansprüche,
aufweisend Lagerungen zur drehbar gelagerten Montage der Kabinenseitenverkleidungsteile unter den Überkopfgepäckablagefächern.

## Claims

1. An aircraft-component assembly system for the assembly of aircraft components, with the aircraft-component assembly system comprising:
an aircraft structure;
individual components of an aircraft cabin;
overhead stowage bins;
an assembly device for pre-assembly and integration of at least a part of the aircraft cabin into the aircraft structure, wherein the assembly device comprises an assembly frame (1) that is designed for a pre-assembly of the part of the aircraft cabin comprising the individual components and the overhead stowage bins;
a transportation system (4, 5) for affixing the pre-assembled part of the aircraft cabin to the assembly frame (1) and for sliding the pre-assembled part from the assembly frame (1) to an open section of the aircraft structure;
wherein the transportation system (4, 5) is designed as a rail system that comprises at least a first rail (4), a second rail and several retaining members (5) for affixing the pre-assembled part of the aircraft cabin to the assembly frame (1), and for sliding the pre-assembled part from the assembly frame (1) to the open section of the aircraft structure;
wherein the first rail is integrated in the aircraft structure and the second rail is integrated in the assembly frame (1); and
wherein the retaining members (5) are integrated in the overhead stowage bins.

2. An aircraft-component assembly system for the assembly of aircraft components, with the aircraft-component assembly system comprising:
an aircraft structure;
individual components of an aircraft cabin;
overhead stowage bins;
an assembly device for pre-assembly and integration of at least a part of the aircraft cabin into the aircraft structure, wherein the assembly device comprises an assembly frame (1) that is designed for a pre-assembly of the part of the aircraft cabin comprising the individual components and the overhead stowage bins;
a transportation system (4, 5) for affixing the pre-assembled part of the aircraft cabin to the assembly frame (1) and for sliding the pre-assembled part from the assembly frame (1) to an open section of the aircraft structure;
wherein the assembly frame (1) comprises several parallel segments (11, 12) that are arranged so as to be essentially horizontal as well as transverse segments (6, 13) that are placed vertically to the aforesaid and reproduce the aircraft structure.
wherein the transportation system (4, 5) is designed as a rail system that comprises at least one rail and several retaining members (5) for affixing the pre-assembled part of the aircraft cabin to the assembly frame (1), and for sliding the pre-assembled part from the assembly frame (1) to the open section of the aircraft structure;
wherein the rail (4) is integrated in the overhead stowage bins; and
wherein the retaining members (5) are fastened to the frame elements (6) of the aircraft structure and to the transverse segments of the assembly frame.

3. The aircraft-component assembly system of claim 1 or 2,
wherein the part of the aircraft cabin comprises cabin sidewall panels.

4. The aircraft-component assembly system of any one of the preceding claims,
wherein the part of the aircraft cabin further comprises a ceiling lining.

5. The aircraft-component assembly system of claim 1, 3 and 4,
wherein the assembly frame (1) comprises several parallel segments (11, 12) that are arranged so as to be essentially horizontal as well as transverse segments (6, 13) that are placed vertically to the aforesaid and reproduce the aircraft structure.

6. The aircraft-component assembly system of any one of the preceding claims, wherein the transportation system comprises access openings in order to provide access to the retaining members (5) for affixation in x-direction, or to make it possible to achieve tolerance compensation or to disassemble the aircraft cabin in the case of maintenance.

7. The aircraft-component assembly system of any one of the preceding claims,
comprising bearing arrangements for the hinged installation of the cabin sidewall panels underneath the overhead stowage bins.

## Revendications

1. Système de montage de composants d'avions pour le montage de composants d'avions, le système de montage de composants d'avions comprenant :
une structure d'avion ;
des composants individuels d'une cabine d'avion ;
des casiers à bagages situés au-dessus de la hauteur de tête;
un dispositif de montage pour le prémontage et l'intégration d'au moins une partie de la cabine d'avion dans la structure d'avion, le dispositif de montage présentant un cadre de montage (1) réalisé pour un prémontage de la partie de la cabine d'avion, constituée des composants individuels et des casiers à bagages situés au-dessus de la hauteur de tête;
un système de transport (4, 5) pour la fixation de la partie prémontée de la cabine d'avion sur le cadre de montage (1) et pour le déplacement de la partie prémontée du cadre de montage (1) dans une section ouverte de la structure d'avion ;
le système de transport (4, 5) étant réalisé sous forme de système de rails, qui présente au moins un premier rail (4), un deuxième rail et plusieurs éléments de retenue (5) pour la fixation de la partie prémontée de la cabine d'avion sur le cadre de montage (1) et pour le déplacement de la partie prémontée du cadre de montage (1) dans la section ouverte de la structure d'avion ;
le premier rail étant intégré dans la structure d'avion et le deuxième rail étant intégré dans le cadre de montage (1) ; et
les éléments de retenue (5) étant intégrés dans les casiers à bagages situés au-dessus de la hauteur de tête.

2. Système de montage de composants d'avions pour le montage de composants d'avions, le système de montage de composants d'avions comprenant :
une structure d'avion ;
des composants individuels d'une cabine d'avion ;
des casiers à bagages situés au-dessus de la hauteur de tête;
un dispositif de montage pour le prémontage et l'intégration d'au moins une partie de la cabine d'avion dans la structure d'avion, le dispositif de montage présentant un cadre de montage (1) réalisé pour un prémontage de la partie de la cabine d'avion, constituée des composants individuels et des casiers à bagages situés au-dessus de la hauteur de tête;
un système de transport (4, 5) pour la fixation de la partie prémontée de la cabine d'avion sur le cadre de montage (1) et pour le déplacement de la partie prémontée du cadre de montage (1) dans une section ouverte de la structure d'avion ;
le cadre de montage (1) étant constitué de plusieurs segments (11, 12) parallèles, disposés de façon essentiellement horizontale, ainsi que de segments transversaux (6, 13) perpendiculaires à ces derniers, qui reproduisent la structure d'avion ;
le système de transport (4, 5) étant réalisé sous forme de système de rails, qui présente au moins un rail et plusieurs éléments de retenue (5) pour la fixation de la partie prémontée de la cabine d'avion sur le cadre de montage (1) et pour le déplacement de la partie prémontée du cadre de montage (1) dans la section ouverte de la structure d'avion ;
le rail (4) étant intégré dans les casiers à bagages situés au-dessus de la hauteur de tête ; et
les éléments de retenue (5) étant fixés sur les couples (6) de la structure d'avion et sur les segments transversaux du cadre de montage.

3. Système de montage de composants d'avions selon l'une des revendications 1 et 2,
la partie de la cabine d'avion présentant des éléments d'habillage latéraux de cabine.

4. Système de montage de composants d'avions selon l'une des revendications précédentes,
la partie de la cabine d'avion présentant en outre un habillage de plafond.

5. Système de montage de composants d'avions selon l'une des revendications 1, 3 et 4,
le cadre de montage (1) étant constitué de plusieurs segments parallèles (11, 12), disposés de façon essentiellement horizontale, ainsi que de segments transversaux (6, 13) perpendiculaires à ces derniers, qui reproduisent la structure d'avion.

6. Système de montage de composants d'avions selon l'une des revendications précédentes,
le système de transport présentant des ouvertures d'accès, pour permettre une accessibilité aux éléments de retenue (5) pour la fixation dans la direction x, une compensation de tolérances ou un démontage de la cabine d'avion en cas de maintenance.

7. Système de montage de composants d'avions selon l'une des revendications précédentes,
comprenant des supports pour le montage tournant des éléments d'habillage latéraux de cabine au-dessous des casiers à bagages situés au-dessus de la hauteur de tête.
